# EUROPÄISCHE PATENTSCHRIFT

(11) **EP 1 231 739 B1**
(45) Veröffentlichungstag und Bekanntmachung des Hinweises auf die Patenterteilung: **02.05.2007**
(21) Anmeldenummer: 01103105.1
(22) Anmeldetag: 09.02.2001
(51) Int. Cl.: H04L 12/24, H04L 1/18

(54) **Verfahren zur gesicherten Übertragung von Alarmnachrichten von einem Netzelement zu einem Netzmanagementsystem**
Method for secure transmission of alarm messages from a network element to a network management system
Méthode de transmission sûre des messages d'alarme d'un élément de réseau à un système de gestion de réseau

(43) Veröffentlichungstag der Anmeldung: 14.08.2002
(73) Patentinhaber: SIEMENS AKTIENGESELLSCHAFT, 80333 München (DE)
(72) Erfinder: Skaperda, John, 82319 Starnberg (DE)

(56) Entgegenhaltungen:
- WO-A-96/20547
- DE-A- 19 752 614
- US-A- 6 076 181
- US-A- 6 092 109

## Beschreibung

Die Erfindung betrifft ein Verfahren sowie ein Softwareprogrammprodukt zur Durchführung des Verfahrens zur gesicherten Übertragung von Alarmnachrichten von einem Netzelement zu einem Netzmanagementsystem innerhalb eines Kommunikationsnetzes.

Heutzutage bieten Netzbetreiber von Kommunikationsnetzen verschiedene Dienste, z.B. den Telefondienst, an. Im Zusammenhang mit einem solchen Telefondienst können bei dessen Durchführung Fehler in verschiedenen Netzelementen des Kommunikationsnetzes auftreten. Die Netzelemente eines solchen Kommunikationsnetzes sind normalerweise an ein zentral ausgestalteten Netzmanagementsystem (z.B. TMN = Telecommunication Management Network) angebunden. Informationen über aufgetretene Fehler, z.B. während eines Telefondienstes, werden netzelementseitig in Alarmnachrichten eingebunden und zum Netzmanagementsystem übertragen. Bei der Übertragung der Alarmnachrichten von einem Netzelement zum Netzmanagementsystem können einzelne Alarmnachrichten auf dem Übertragungsweg, z.B. durch eine Überlastsituation, verloren gehen. Das für die Kommunikation zwischen Netzelement und Netzmanagementsystem üblicherweise verwendete SMNP-Protokoll (Simple Management Network Protocol) unterstützt netzmanagementsystemseitig derzeit weder Mittel zum Erkennen von fehlenden bzw. verloren gegangenen Alarmnachrichten noch Mittel zum Anfordern einer erneuten Übertragung der fehlenden Alarmnachricht vom Netzelement zum Netzmanagementsystem.

Konventionell wird dieses Problem in einem an ein Netzmanagementsystem angebundenen Kommunikationsnetz dadurch gelöst, dass periodisch nach einer vorbestimmten Zeitspanne sämtliche Alarminstanzen der Netzelemente durch das Netzmanagementsystem abgefragt werden (Pollingverfahren). Wenn bei der Übertragung eine Alarmnachricht verloren geht, dann wird dies vom Netzmanagementsystem erst bei der nächstfolgenden Abfrage aller Alarminstanzen des Netzelements festgestellt.

Eine Alternative dazu, um das geschilderte Problem zu lösen, ist darin zu sehen, dass das Netzmanagementsystem die erhaltenen Alarmnachrichten den Netzelementen bestätigt (Quittierungsverfahren). Für den Fall, dass ein Netzelement hier eine von ihm übertragene Alarmnachricht keine Bestätigung erhält, wird diese Nachricht nochmal von diesem zum Netzmanagementsystem übertragen.

Beide genannten Vorgehensweisen haben den Nachteil, dass das Kommunikationsnetz mit einem erhöhtem Nachrichtenverkehr belastet wird. Beim Pollingverfahren müssen alle Alarminstanzen abgefragt werden, obwohl die meisten keine Zustandsänderung im Vergleich zur vorhergehenden Abfrage haben werden. Anderseits müssen beim Quittierungsverfahren alle Alarmnachrichten bestätigt werden, obwohl fast keine Alarmnachrichten im Kommunikationsnetz tatsächlich verloren gehen werden.

Die Aufgabe der Erfindung besteht darin, ein Verfahren zur gesicherten Übertragung von Alarmnachrichten so auszugestalten, dass die vorstehend erwähnten Nachteile überwunden werden.

Die Aufgabe wird durch die im Patentanspruches 1 angegebenen Merkmale hinsichtlich eines Verfahrens und durch die Merkmale des Patentanspruches 10 hinsichtlich eines Softwareprogrammprodukts zur Durchführung des Verfahrens gelöst. Vorteilhafte Weiterbildungen der Erfindung sind in den abhängigen Ansprüchen angegeben.

Ein wesentlicher Aspekt der Erfindung besteht darin, dass netzmanagementsystemseitig die Reihenfolge der übertragenen Alarmnachrichten von einem Netzelement zu einem Netzmanagementsystem anhand von der Identifikationsnummer, die die jeweilige Alarmnachricht kennzeichnet, überprüft wird. Bei Feststellen des Fehlens einer Alarmnachricht wird eine die Identifikationsnummer der fehlenden Nachricht enthaltene Anforderungsnachricht zum Netzelement übertragen, um eine erneute Übertragung der fehlenden Alarmnachricht zu bewirken.

Anstatt der Übertragung der fehlenden Alarmnachricht kann auch eine Übertragung aller offenen Alarme angefordert werden. Ein offener Alarm heißt, dass ein Alarmereignis für eine Alarminstanz aufgetreten ist.

Auf diese Weise wird das Netzelement, das beim herkömmlichen Verfahren gemäß dem Stand der Technik bei der Abfrage von Alarminstanzen ein passives Verhalten aufweist, zu einem aktiven Kommunikationspartner für das Netzmanagementsystem. Das Netzelement überträgt bei Auftreten eines Alarmereignisses sofort eine Alarmnachricht ohne eine vom Netzmanagementsystem erforderliche Aktion . Um eine gesicherte Übertragung von Alarmnachrichten ohne Nachrichtenverlust zu gewährleisten, werden die zu übertragenden Alarmnachrichten mit Identifikationsnummern versehen. Anhand dieser Identifikationsnummern kann netzmanagementsystemseitig die Reihenfolge der übertragenen Alarmnachrichten überprüft und somit ein Fehlen einer Alarmnachricht festgestellt werden. Gegebenenfalls kann eine erneute Übertragung der fehlenden Alarmnachricht mit Hilfe dessen Identifikationsnummer angefordert werden.

Das erfindungsgemäße Verfahren bringt den Vorteil mit sich, dass ein netzmanagementsystemseitiges regelmäßig periodisches Abfragen von Alarminstanzen aller Netzelemente nicht mehr erforderlich ist. Es reicht aus, eine Anforderungsnachricht, die die aktuelle Identifikationsnummer der zuletzt übertragenen Alarmnachricht abfragt, zu einem Netzelement zu übertragen. Dadurch wird das Kommunikationsnetz nachrichtenverkehrsmäßig erheblich weniger belastet.

Zweckmäßigerweise wird bei einer erfolglosen Anforderung der fehlenden Alarmnachricht die Anforderungsnachricht nach einer vorbestimmten Zeitdauer erneut übertragen.

Das Dokument US6092109 ("Information matching system and its matching method for matching information between terminal equipment connected via network ") - NEC Corporation beschreibt ein Verfahren zur gesicherten Übertragung von Alarmnachrichten zwischen Netzmanager und -agenten, bei dem der Netzmanager anhand von übertragenen Sequenznummern beim Fehlen einer solchen Nummer die Fehlübertragung eines Alarmes feststellen und in diesem Fall die Neuübertragung der fehlenden Nachricht anfordern kann.

Eine besonders günstige Lösung ergibt sich durch Anwendung des erfindungsgemäßen Verfahrens während oder unmittelbar nach einer Kaltstart- und/oder Warmstartphase des Netzmanagementsystems. Nach der Initialisierung, fordert das Netzmanagementsystem vom Netzelement die Übertragung seiner aktuell offenen Alarme an. Eine Abfrage aller Alarminstanzen ist in dieser Synchronisationsphase nicht notwendig. Genauso kann während oder unmittelbar nach einer Kalt- und/oder Warmstartphase des Netzelements alle offenen Alarme des Netzelements angefordert werden.

Um die Sicherheit für eine vollständige Übertragung der Alarmnachrichten während oder unmittelbar nach einer Kaltstart- bzw. Warmstartphase zu gewährleisten und parallel dazu neue Alarmereignisse verarbeiten zu können, ist die Alarmnachricht mit zumindest einer weiteren Identifikationsnummer für die Kaltstart- bzw. Warmstartphase gekennzeichnet.

Um die Überprüfung der Reihenfolge der übertragenen Alarmnachrichten zu gewährleisten, wird jede Identifikationsnummer der zuletzt empfangenen Alarmnachricht netzmanagementsystemseitig und netzelementseitig festgehalten.

Die Überprüfung der Reihenfolge der übertragenen bzw. empfangenen Alarmnachrichten ist dadurch vorteilhaft ausgestaltet, wenn jede festgehaltene Identifikationsnummer mit der korrespondierenden Identifikationsnummer der zuletzt übertragenen Alarmnachricht verglichen wird.

Eine weitere vorteilhafte Vorgehensweise bei der Überprüfung der Reihenfolge der übertragenen Alarmnachrichten wird dadurch erzielt, dass periodisch zumindest eine aktuelle Iden-tifikationsnummer der zuletzt übertragenen Alarmnachricht vom Netzelement abgefragt wird. Dadurch kann auf einfache Weise das Netzmanagementsystem feststellen, ob das betroffene Netzelement zur Verfügung steht und ob von ihm Alarmnachrichten fehlen.

Zweckmäßigerweise wird im Falle einer erfolgslosen Abfrage der zumindest einen Identifikationsnummer die Anforderungsnachricht nach einer vorbestimmten Zeitdauer wiederholt.

Gemäß einer vorteilhaften Weiterbildung der Erfindung wird die abgefragte Identifikationsnummer mit der korrespondierenden Identifikationsnummer der zuletzt empfangenen Alarmnachricht verglichen. Bei gegebenenfalls mehrfach zeitlich nach einander auftretenden Nichtübereinstimmungen wird eine mit der fehlenden Identifikationsnummer enthaltene Anforderungsnachricht zum Netzelement übertragen. Hierdurch wird auf vereinfachte Weise sichergestellt, dass die fehlende Alarmnachricht erneut vom Netzelement zum Netzmanagementsystem übertragen wird oder zumindest alle offenen Alarme angefordert werden.

Weitere vorteilhafte Ausgestaltungen der Erfindung sehen vor, dass die Übertragung der Alarmnachrichten gemäß dem standardisierten Protokoll SMNP (Simple Management Network Protocol) oder gemäß dem standardisierten Protokoll CMIP (Common Management Information Protocol) durchgeführt wird. Dabei werden die Parameter einer Alarmnachricht nach dem ITU X.733 Standard festgelegt. Insbesondere kann die Identifikationsnummer durch den, im ITU X.721 Standard definierten und im ITU X.733 Standard benutzten, Parameter NotificationId repräsentiert werden.

Zur Ausführung des erfindungsgemäßen Verfahrens durch einen Prozessor ist zweckmäßigerweise ein mehrere Softwarecodemodule umfassendes Softwareprogrammprodukt vorgesehen.

Die Implementierung des Softwareprogrammprodukts für das Netzmanagementsystem ist sehr flexibel und kann jederzeit an die Bedürfnisse der Netzbetreiber bzw. an die Strukturen und Charakteristika des Kommunikationsnetzes angepasst werden. Beispielsweise kann für den Fall, dass das Netzmanagementsystem nahezu zu 100 Prozent verfügbar ist und das Kommunikationsnetz sicher ausgestaltet ist, gewünscht sein, dass nur Module zur Anzeige von Alarmnachrichten für das Netzmanagementsystem implementiert werden. Für den Fall, dass das Netzmanagement nicht immer verfügbar oder aufgrund von Wartungsarbeiten ausgefallen ist, können zusätzlich Module, die für die Abfrage aller offenen Alarme vom Netzelement verantwortlich sind, implementiert werden. Es ist auch möglich, Module, die für die Anforderung einer erneuten Übertragung einer einzelnen fehlenden Alarmnachricht geeignet sind, zu implementieren.

Nachstehend wird ein Ausführungsbeispiel der Erfindung unter Bezugnahme auf eine Zeichnung näher erläutert.

In der Zeichnung zeigen:
Figur 1 ein Ablaufdiagramm zum erfindungsgemäßen Verfahren nach einer Kalt- bzw. Warmstartphase, der im folgenden als Normalbetrieb angesehen wird, zwischen dem Netzmanagementsystem und einem Netzelement innerhalb eines Kommunikationsnetzes,
Figur 2 ein Ablaufdiagramm zum erfindungsgemäßen Verfahren bei Normalbetrieb, wobei bei der Übertragung von Alarmnachrichten mehrere Alarmnachrichten auf dem Übertragungsweg verloren gegangen sind,
Figur 3 ein Ablaufdiagramm zum erfindungsgemäßen Verfahren bei Normalbetrieb, wobei die Reihenfolge der übertragenen Alarmnachrichten vertauscht am Netzmanagementsystem empfangen werden,
Figur 4 ein Ablaufdiagramm zum erfindungsgemäßen Verfahren während bzw. unmittelbar nach einer Kalt- bzw. Warmstartphase, wobei das Netzelement keine offene Alarme aufweist,
Figur 5 ein Ablaufdiagramm zum erfindungsgemäßen Verfahren während bzw. unmittelbar nach einer Kalt- bzw. Warmstartphase, wobei das Netzelement offene Alarmnachrichten aufweist und die zum Netzmanagementsystem nach einer entsprechenden Anforderung sendet.

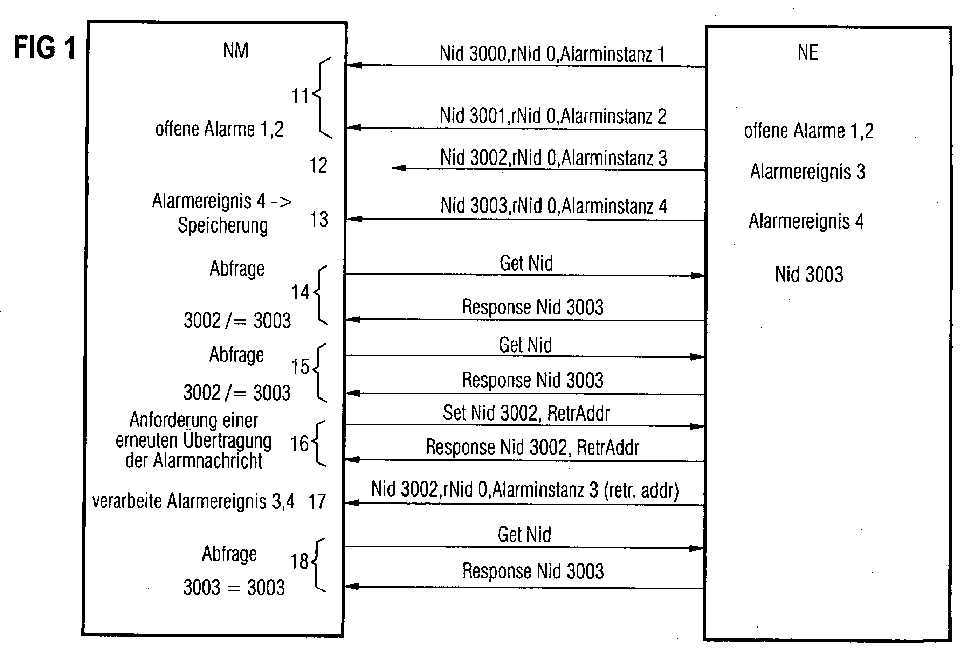

Figur 1 deutet ein Netzmanagementsystem NM und ein Netzelement NE eines Kommunikationsnetzes an, zwischen denen Nachrichten ausgetauscht werden. Der Nachrichtenaustausch zwischen dem Netzmanagementsystem und dem Netzelement wird vorzugsweise mit Hilfe des SNMP-Protokolls (Simple Management Network Protocol) durchgeführt. Wenn sich im Netzelement NE der Alarmzustand aufgrund eines Alarmereignisses ändert, sendet das Netzelement ein oder mehrere Alarmnachrichten zum Netzmanagementsystem. Dieser Schritt ist in Figur 1 mit 11 gekennzeichnet. Die Struktur der zu übertragenen Alarmnachrichten ist vorzugsweise an den ITU X.733 Standard angelehnt und beispielsweise wie folgt aufgebaut:

| Variablenname | Bedeutung | Datentyp/Wert |
|---|---|---|
| alarmClass | Alarmklasse | DisplayString |
| alarmInstance | Alarminstanz | DisplayString |
| eventTime | Zeit, zu der der Alarm erzeugt wurde. | DateAndTime (OCTET STRING) |
| | | (YYYYMMDDHHMMSS.T -HH:MM) |
| notificationNid | Verwendete Alarmidentifikator/Sequenznummer, wenn das Netzelement und das Netzmanagementsystem synchronisiert sind. | Unsigned32 |
| corrNotifld | Korrelierter Nachrichtenidentifikator | Unsigned32 |
| reloadNotifld | Alarmidentifikator/Sequenznummer, wenn das Netzelement seine offenen Alarmnachrichten zum Netzmanagementsystem sendet. | Unsigned32 |
| entPhysIndex | Physikalischer Index des Alarms | Unsigned32 |
| alarmType | Letzte Objektidentifikator-Komponente der in ITU X.721 definierten Alarme | INTEGER {indeterminate(1), |
| | | communicationAlarm(2), |
| | | enviromentalAlarm(3), |
| | | equipmentAlarm(4), |
| | | prooessingErrorAlarm(10), |
| | | qualityOfServiceAlarm(11)} |
| perceivedSeverity | Schwerwiegigkeit des Alarms | INTEGER{indeterminate(1), |
| | | critical(2), |
| | | major(3), |
| | | minor(4), |
| | | warning(5), |
| | | cleared(6)} |
| instanceState | Sobald die Alarminstanz des Netzelements mehr als einen offenen Alarm hat, spezifiziert dieses Attribut den überall gültigen Status der Alarminstanz. Wenn die Alarminstanz nur einen Alarm hat, dann ist dieses Attribut äquivalent zum Attribut perceivedSeverity. Andernfalls zeigt es den schwerwiegenstens, individuellen Status der Alarminstanz. Dieses Attribut wird vom Alarmagenten des Netzelements verwaltet. | Wie bei perceivedSeverity |
| probableCause | Mögliche Ursache des Alarms; letzte Objektidentifikatitor-Komponente der möglichen Ursachen, die in ITU X.721 definiert sind. | Unsigned32 |
| repairAction | Vorgeschlagene Aktion zur Fehlerbehebung | Unsigned32 |

Alarmnachrichten werden in den Figuren durch die Kennzeichnung "Nid Nr., rNid Nr., Alarminstanz" vereinfacht dargestellt. In Schritt 12 kommt z.B. die Alarmnachricht mit der Nid 3002 bei ihrer Übertragung vom Netzelement nicht zum Netzmanagementsystem an. In Schritt 13 wird eine weitere Nachricht z.B. mit der Nid 3003 zum Netzmanagementsystem gesendet und im Netzmanagementsystem durch Speicherung festgehalten. In den nächsten beiden Schritten, gekennzeichnet mit 14, fragt das Netzmanagementsystem mit einer Get-Nachricht, die Identifikationsnummer der zuletzt übertragenen Alarmnachricht ab und erhält eine Antwortnachricht, die die Identifikationsnummer Nid 3003 enthält. Die erhaltene Identifikationsnummer 3003 wird dann mit der Identifikationsnummer der zuletzt empfangenen Alarmnachricht z.B. 3002 verglichen. In diesem Beispiel stimmen die Identifikationsnummern nicht überein, wodurch das Netzmanagementsystem erkennt, dass eine Alarmnachricht z.B. Nid 3002 bei der Übertragung potenziell verloren gegangen ist. Beim nächstfolgenden Abfragezeitpunkt fragt das Netzmanagementsystem in den mit 15 gekennzeichneten Schritten mit einer Get-Nachricht nochmal die Identifikationsnummer der zuletzt übertragenen Alarmnachrichten ab. In der Antwortnachricht erhält das Netzmanagementsystem die Identifikationsnummer z.B. 3003. Eine weitere Prüfung der Reihenfolge der empfangenen Alarmnachrichten, der durch Vergleich der in der Antwortnachricht erhaltenen Identifikationsnummer mit der Identifikationsnummer der zuletzt erhaltenen Alarmnachricht, führt wieder zu einem negativen Prüfungsergebnis, worauf mit den Schritten 16 das Netzmanagementsystem mit einer Anforderungsnachricht Set die die Identifikationsnummer z.B. 3002 sowie die Netzadresse des Netzmanagementsystems Retr Addr enthält, die erneute Übertragung der fehlenden bzw. verloren gegangenen Alarmnachricht anfordert. Auf die Anforderungsnachricht erhält das Netzmanagementsystem eine Antwortnachricht. Danach wird vom Netzelement die fehlende Alarmnachricht z.B. Nid 3002 zum Netzmanagementsystem erneut übertragen, gekennzeichnet durch 17. Die gespeicherte Alarmnachricht mit Nid 3003 wird dann beim Eintreffen der fehlenden Alarmnachricht mit Nid 3002 verarbeitet. In den mit 18 gekennzeichneten Schritten ruft das Netzmanagementsystem mit einer Get-Nachricht die Identifikationsnummer der zuletzt übertragenen Alarmnachricht beim Netzelement ab und erhält mit einer Antwortnachricht die Identifikationsnummer z.B. 3003, worauf die Reihenfolge der erhaltenen Alarmnachrichten in der vorstehend beschriebenen Weise überprüft wird. Im Beispiel stimmen jetzt die Identifikationsnummern (3003) überein, womit das Netzmanagementsystem alle die vom Netzelement zu übertragenen Alarmnachrichten erhalten hat.

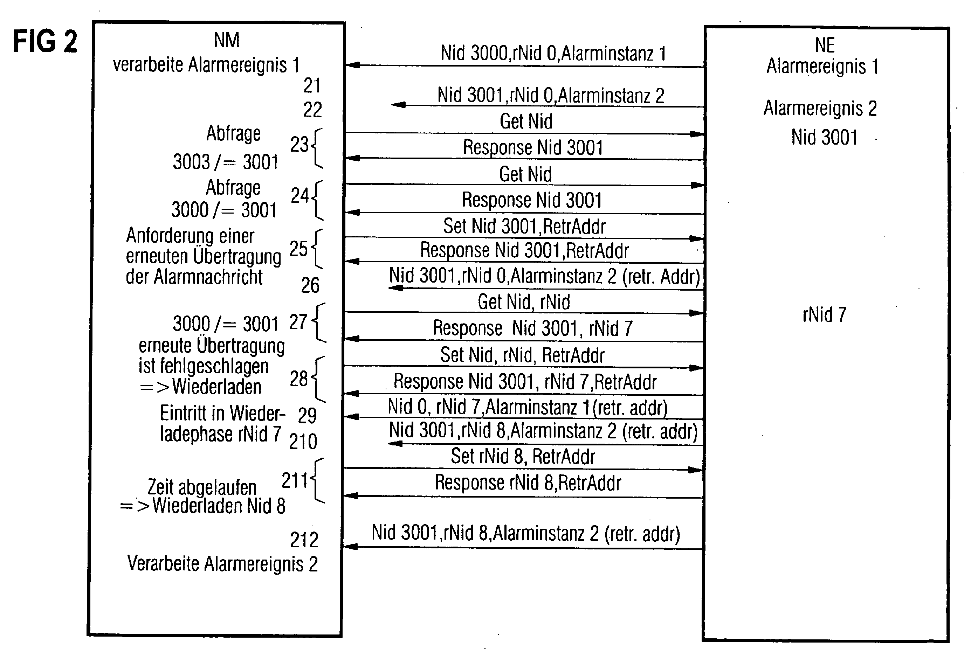

In Figur 2 wird in der schon vorstehend beschriebenen Weise in Schritt 21 eine Alarmnachricht vom Netzelement NE zum Netzmanagementsystem NM übertragen. In Schritt 22 geht die vom Netzelement übertragene Alarmnachricht mit der Identifikationsnummer Nid 3001 verloren. In Schritt 23 fragt das Netzmanagementsystem in der bereits vorstehend beschriebenen Weise die Identifikationsnummer der zuletzt übertragenen Alarmnachricht vom Netzelement ab und vergleicht diese Identifikationsnummer mit der Identifikationsnummer der zuletzt erhaltenen Alarmnachricht. In Schritt 24, bei der nächsten Abfrage , fragt das Netzmanagementsystem die Identifikationsnummer erneut in der schon beschriebenen Weise vom Netzelement ab und führt den Vergleich der erhaltenen Identifikationsnummer mit der Identifikationsnummer der zuletzt erhaltenen Alarmnachricht durch. Auch dieses Vergleichsergebnis ergibt eine Nichtübereinstimmung, worauf in den Schritten, gekennzeichnet mit 25, das Netzelement mit Hilfe einer Set-Nachricht, wie in der vorstehend beschriebenen Weise die erneute Übertragung der fehlenden Alarmnachricht vom Netzelement anfordert. Die in Schritt 26 erneut übertragene Alarmnachricht mit der Identifikationsnummer Nid 3001 geht wieder verloren. In den Schritten, gekennzeichnet mit 27, fragt das Netzmanagementsystem mit einer Get-Nachricht, die neben der Identifikationsnummer Nid auch eine weitere Identifikationsnummer rNid enthält, beide Identifikationsnummern Nid und rNid vom Netzelement in der schon vorstehend beschriebenen Weise ab. Nach Überprüfung der Reihenfolge der erhaltenen Alarmnachrichten anhand der Identifikationsnummer Nid, die eine Nichtübereinstimmung der Identifikationsnummern zum Ergebnis hat, wird in den Schritten 28 alle offene Alarme mit Hilfe einer die Identifikationsnummern Nid und rNid sowie die Adresse Retr Addr enthaltenen Set-Nachricht angefordert. Während der Wiederladephase werden zum Netzmanagementsystem beide offenen Alarme mit den aus der Netzelementsicht aktuellen Identifikationsnummern rNid 7 und rNid 8 übertragen. In Schritt 210 schlägt die erneute Übertragung der schon zweimal zuvor angeforderten und verloren gegangenen Alarmnachricht mit der Identifikationsnummer Nid 3001 fehl. Da die erneute Übertragung der zuvor angeforderten verloren gegangenen Alarmnachricht während der Wiederladephase geschieht, trägt diese erneut übertragene Alarmnachricht die Identifikationsnummer rNid 8. Daraufhin fordert das Netzmanagementsystem in den Schritten 211 mit einer Set-Nachricht, die die rNid der fehlenden Nachricht enthält, die entsprechende fehlende Alarmnachricht vom Netzelement an, worauf das Netzmanagementsystem eine entsprechende Antwortnachricht - wie vorstehend bereits beschrieben - erhält. In Schritt 212 überträgt das Netzelement die fehlende Nachricht mit der Identifikationsnummer Nid 3001 und rNid 8 erneut und die wird schliesslich erfolgreich vom Netzmanagementsystem empfangen. Ab diesem Zeitpunkt sind Netzelement und Netzmanagementsystem synchronisiert, d.h dem Netzmanagementsystem sind nun beide offene Alarme des Netzelementes bekannt.

Zusammenfassend ausgedrückt, stellt die Identifikationsnummer Nid eine sogenannte Sequenznummer dar, die die zu übertragenen Alarmnachrichten während des Normalbetriebs identifiziert. Die gegebenenfalls zusätzlich vorhandene Identifikationsnummer rNid ist eine Sequenznummer, die dann relevant ist, wenn Alarmnachrichten während einer Wiederladephase zum Netzmanagementsystem übertragen werden. Die Identifikationsnummer rNid ermöglicht dem Netzmanagementsystem, fehlende Alarmnachrichten während der Wiederladephase zu erkennen. Im Normalbetrieb hat die Identifikationsnummer rNid normalerweise den Wert 0. Der Zustand, bei dem zum Netzmanagementsystem alle zu übertragenen Alarmnachrichten korrekt übertragen sind, ist dann erreicht, wenn nach einer Wiederladephase eine Alarmnachricht mit den Identifikationsnummern gekennzeichnet ist, die vorzugsweise den Wert Nid > 0 und rNid die korrekte nächstfolgende Sequenznummer enthält.

Vorzugsweise wird im Netzmanagementsystem zur Gewährleistung einer sicheren Übertragung von Alarmnachrichten nach folgender Strategie vorgegangen:

| Aktion ist fehlgeschlagen | Reaktion des Netzmanagementsystems |
|---|---|
| Keine Antwort auf periodische Abfrage (GET Nid) | Erneute Abfrage nach einer vorbestimmten Zeitdauer (GET Nid) |
| Feststellen des Fehlens einer Alarmnachricht während des Normalbetriebs | Anforderung einer erneuten Übertragung der fehlenden Alarmnachricht (SET on Nid) |
| Feststellen des Fehlens einer Alarmnachricht während der Wiederladephase | Anforderung einer erneuten Übertragung der fehlenden Alarmnachricht (Set on rNid) |
| Fehlende Alarmnachrichten können nicht abgefragt werden | Erneute Synchronisation (SET on Nid and rNid), d.h. Anforderung aller offenen Alarme |
| (erneute) Synchronisation schlägt fehl (GET/SET on Nid and rNid) | Erneuter Versuch in periodischen Zeitabständen (GET/SET on Nid and rNid) |

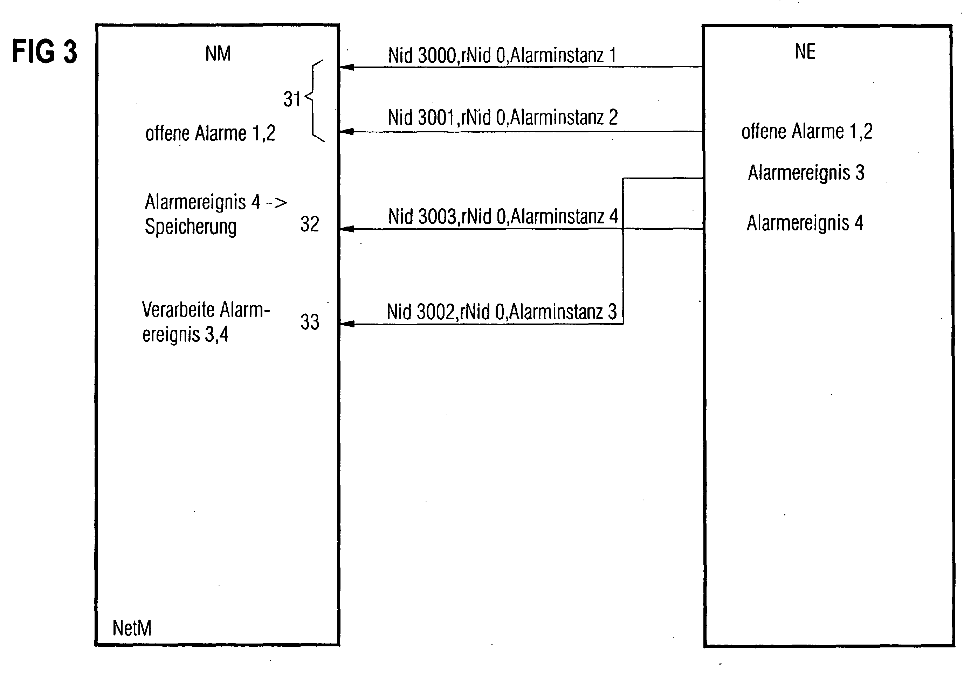

In Figur 3 werden in den Schritten 31 zwei Alarmnachrichten in der vorstehend beschriebenen Weise vom Netzelement zum Netzmanagementsystem übertragen. In den Schritten 32 und 33 kommt die übertragene Alarmnachricht mit der Identifikationsnummer Nid 3002 später beim Netzmanagementsystem an, als die übertragene Alarmnachricht mit der Identifikationsnummer Nid 3003. Vorzugsweise speichert das Netzmanagementsystem jede Identifikationsnummer von ankommenden Alarmnachrichten, um fehlende Alarmnachrichten feststellen zu können bzw. um die Alarmnachrichten gegebenenfalls für eine spätere Weiterverarbeitung in richtige Reihenfolge sortieren zu können.

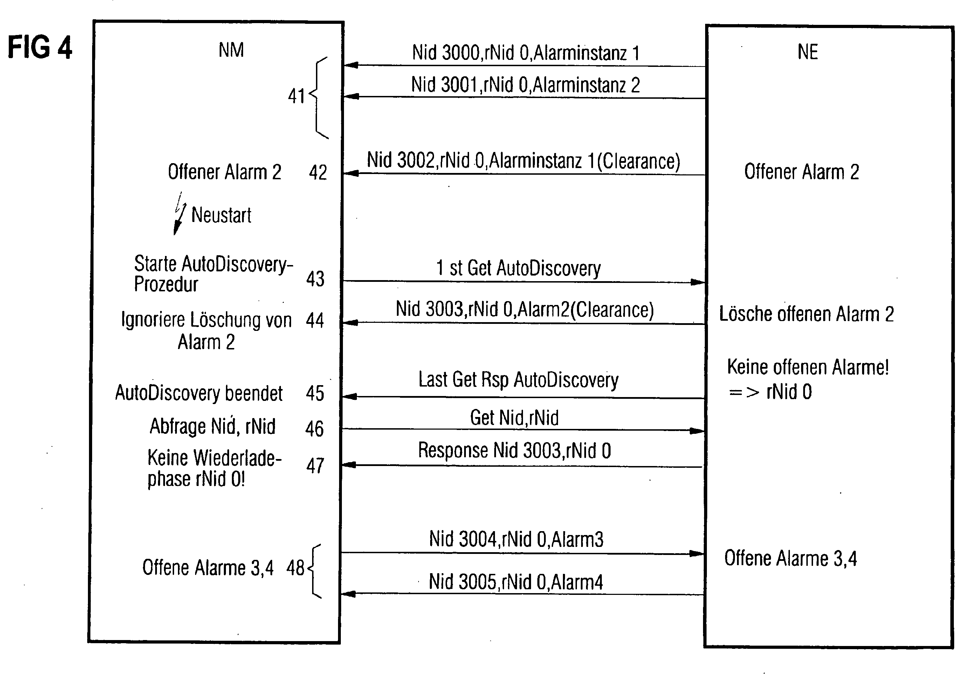

In Figur 4 werden zwei Alarmnachrichten in den Schritten 41 in der vorstehend beschriebenen Weise vom Netzelement zum Netzmanagementsystem übertragen. In Schritt 42 wird eine Alarmnachricht, die eine Löschinformation zur zuvor übertragenen Alarmnachricht der Alarminstanz 1 enthält, zum Netzmanagementsystem übertragen. Wenn das Netzmanagementsystem neu gestartet werden muss, dann wird nach der Kalt- bzw. Warmstartphase eine sogenannte AutoDiscovery-Prozedur gestartet. Die Auto-Discovery-Prozedur wird dazu verwendet, um das Netzmanagementsystem vollständig über die vorhandenen Alarminstanzen eines Netzelementes im Kommunikationsnetz zu informieren. In Schritt 43 wird mit einer zum Netzelement zu übertragenden Get-AutoDiscovery-Nachricht die AutoDiscovery-Prozedur gestartet. In Schritt 44 wird z.B. eine weitere Alarmnachricht mit der Identifikationsnummer Nid 3003, die eine Löschinformation für die zuvor übertragene Alarmnachricht der Alarminstanz 2 enthält, zum Netzmanagementsystem übertragen und vom Netzmanagementsystem nicht weiterverarbeitet. In Schritt 45 wird die Autodiscoveryprozedur mittels einer vom Netzmanagementsystem erhaltenen Last Get Rsp AutoDiscovery-Nachricht beendet. Danach fragt das Netzmanagementsystem in Schritt 46 mit einer Get-Nachricht die Identifikationsnummern der zuletzt übertragenen Alarmnachricht vom Netzelement ab und erhält in Schritt 47 mit der Antwortnachricht die Identifikationsnummer Nid 3003 und rNid 0. Die Identifikationsnummer rNid 0 bedeutet, dass im Netzelement momentan keine offenen Alarme vorliegen. Somit kann das Netzmanagementsystem die Wiederladephase als beendet betrachten. In den Schritten 48 erhält das Netzmanagementsystem weitere Alarmnachrichten Nid 3004 und Nid 3005. Es sei angenommen, dass falls später ein Fehlen einer Alarmnachricht vom Netzelement beim nächstfolgenden Abfragezeitpunkt festgestellt worden ist, dann würde das Verfahren in der zu Figur 1 beschriebenen Weise fortgesetzt werden. Insbesondere würden hierzu die Schritte 16 bis 18 in entsprechender Weise ausgeführt werden.

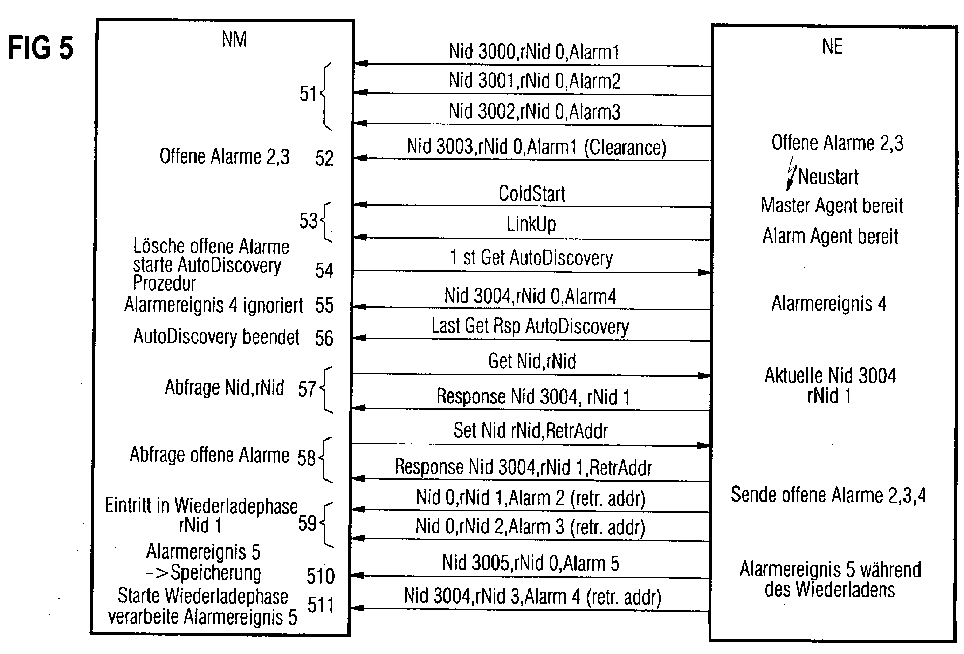

In Figur 5 werden in Schritt 51 Alarmnachrichten vom Netzelement zum Netzmanagementsystem übertragen. In Schritt 52 wird eine weitere Alarmnachricht, die eine Löschinformation zur zuvor übertragenen Alarmnachricht der Alarminstanz 1 enthält, zum Netzmanagementsystem übertragen. Dementsprechend, sind Alarme für die Instanzen 2 und 3 offen.

Das Netzelement überträgt in den Schritten 53 Nachrichten ColdStart und Linkup zum Netzmanagementsystem, um seine Kalt- bzw. Warmstartphase mitzuteilen. Danach wird in den Schritten 54, 55 und 56 eine AutoDiscovery-Prozedur in entsprechender Weise zu den Schritten 43, 44 und 45 ausgeführt. In den Schritten 57 werden die Identifikationsnummern der zuletzt übertragenen Alarmnachrichten in entsprechender Weise zu den Schritten 46 und 47 vom Netzelement abgefragt. Im diesem Fall hat das Netzelement offene Alarme und liefert in der Nachricht Response entsprechend eine Identifikationsnummer rNid > 0. Der zurückgegebene rNid Wert ist derjenige, der die erste offene Alarmnachricht kennzeichnen wird, z.B. rNid 1. Demnach wird in den Schritten 58 alle offenen Alarme des Netzelements durch eine Set-Anforderungsnachricht angefordert. Das Netzmanagementsystem tritt dann in die Wiederladephase ein und erhält in den Schritten 59 während dieser Phase vom Netzelement die ersten beiden Alarmnachrichten, die insbesondere mit den Identifikationsnummern rNid 1 und rNid 2 gekennzeichnet sind. Während der Wiederladephase wird in Schritt 510 ein neues Alarmereignis vom Netzelement erkannt und eine Alarmnachricht übertragen. Erst danach überträgt das Netzelement in Schritt 511 die zuvor in den Schritten 58 angeforderte und mit rNid 3 gekennzeichnete, noch ausstehende Alarmnachricht. Um die korrekte Reihenfolge der übertragenen Alarmnachrichten in der Wiederladephase im Netzmanagementsystem wieder herstellen zu können, werden die Identifikationsnummern der Alarmnachrichten mit rNid 0 z.B. wie in Schritt 510 im Netzmanagementsystem zwischengespeichert. Für den Fall, dass während des Verfahrens eine übertragene Alarmnachricht fehlt bzw. verloren gegangen ist, müsste das Verfahren vor bzw. nach einer Wiederladephase entsprechend den Schritten 14 bis 17 der Figur 1 ausgeführt werden und während der Wiederladephase entsprechend den Schritten 28 der Figur 2 fortgesetzt werden.

## Patentansprüche

1. Verfahren zur gesicherten Übertragung von Alarmnachrichten von einem Netzelement (NE) zu einem Netzmanagementsystem (NM) innerhalb eines Kommunikationsnetzes, bei dem netzmanagementseitig die Reihenfolge der übertragenen Alarmnachrichten anhand einer Identifikationsnummer (Nid), die die jeweilige Alarmnachricht kennzeichnet, überprüft wird und beim Feststellen des Fehlens einer Alarmnachricht eine die Identifikationsnummer (Nid) der fehlenden Alarmnachricht enthaltene Anforderungsnachricht (Set) zum Netzelement (NE) übertragen wird, um eine erneute Übertragung der fehlenden Alarmnachricht zu bewirken, **dadurch gekennzeichnet, dass** die Alarmnachricht mit zumindest einer weiteren Identifikationsnummer (rNid) für die Kaltstart- und/oder Warmstartphase **gekennzeichnet** ist.

2. Verfahren nach Anspruch 1, **dadurch gekennzeichnet, dass** die die Identifikationsnummer (Nid) und/oder die zumindest eine weitere Identifikationsnummer (rNid) der zuletzt übertragenen Alarmnachricht netzmanagementseitig und netzelementseitig festgehalten wird.

3. Verfahren nach Anspruch 2, **dadurch gekennzeichnet, dass** zur Überprüfung der Reihenfolge der übertragenen Alarmnachricht jede festgehaltene Identifikationsnummer (Nid, rNid) mit der korrespondierenden Identifikationsnummer der zuletzt übertragenen Alarmnachricht verglichen wird.

4. Verfahren nach den Ansprüchen 1 bis 3, **dadurch gekennzeichnet, dass** zur Überprüfung der Reihenfolge der übertragenen Alarmnachrichten die eine Identifikationsnummer (Nid) und/oder die zumindest eine weitere Identifikationsnummer (rNid) der zuletzt übertragenen Alarmnachricht vom Netzelement (NE) abgefragt (Get) wird.

5. Verfahren nach Anspruch 4, **dadurch gekennzeichnet, dass** im Falle einer erfolglosen Abfrage (Get) einer Identifikationsnummer die Abfrage nach einer vorbestimmten Zeitdauer wiederholt wird.

6. Verfahren nach Anspruch 4 oder 5, **dadurch gekennzeichnet, dass** jede abgefragte Identifikationsnummer (Nid, rNid) mit der korrespondierenden Identifikationsnummer (Nid, rNid) der zuletzt übertragenen Alarmnachricht verglichen wird und bei deren Nichtübereinstimmung eine zumindest die nicht übereinstimmende, abgefragte Identifikationsnummer (Nid, rNid) enthaltene Anforderungsnachricht (Set) zum Netzelement übertragen wird.

7. Verfahren nach einem der Ansprüche 1 bis 6, **dadurch gekennzeichnet, dass** die Übertragung der Alarmnachrichten gemäß dem standardisierten Protokoll SNMP (Simple Network Management Protocol) oder gemäß dem standardisierten Protokoll CMIP (Common Management Information Protocol) durchgeführt wird.

8. Verfahren nach einem der Ansprüche 1 bis 7, **dadurch gekennzeichnet, dass** die Parameter der Alarmnachricht nach dem Standard ITU X.733 festgelegt sind.

9. Verfahren nach Anspruch 8, **dadurch gekennzeichnet, dass** die Identifikationsnummer (Nid) durch den Parameter Notification ID und/oder eine weitere Identifikationsnummer (rNid) durch den Parameter reloadNotificationNid repräsentiert werden.

10. Softwareprogrammprodukt umfassend Softwaremodule, mit denen ein Verfahren nach einem der Ansprüche 1 bis 9 durch einen Prozessor ausgeführt wird.

## Claims

1. Method for the reliable transmission of alarm messages from a network element (NE) to a network management system (NM) within a communication network, in which the sequence of the transmitted alarm messages is checked on the network management system side with reference to an identification number (Nid) which characterizes the relevant alarm message and, if it is established that an alarm message is missing, a request message (Set) containing the identification number (Nid) of the missing alarm message is transmitted to the network element (NE) in order to effect a renewed transmission of the missing alarm message,
**characterized in that**
the alarm message is **characterized by** means of at least one further identification number (rNid) for the cold-start and/or warm-start phase.

2. Method according to Claim 1,
**characterized in that**
the identification number (Nid) and/or the at least one further identification number (rNid) of the most recently transmitted alarm message is retained on the network management system side and on the network element side.

3. Method according to Claim 2,
**characterized in that**
for checking the sequence of the transmitted alarm message, each retained identification number (Nid, rNid) is compared with the corresponding identification number of the most recently transmitted alarm message.

4. Method according to Claims 1 to 3,
**characterized in that**
for checking the sequence of the transmitted alarm messages, the one identification number (Nid) and/or the at least one further identification number (rNid) of the most recently transmitted alarm message is retrieved (Get) from the network element (NE).

5. Method according to Claim 4,
**characterized in that**
in the event of an unsuccessful retrieval (Get) of an identification number, the retrieval is repeated after a predefined time period.

6. Method according to Claim 4 or 5,
**characterized in that**
each retrieved identification number (Nid, rNid) is compared with the corresponding identification number (Nid, rNid) of the most recently transmitted alarm message and, if they do not match, a request message (Set) containing at least the non-matching retrieved identification number (Nid, rNid) is transmitted to the network element.

7. Method according to one of Claims 1 to 6,
**characterized in that**
the transmission of the alarm messages is carried out in accordance with the standardized protocol SNMP (Simple Network Management Protocol) or in accordance with the standardized protocol CMIP (Common Management Information Protocol).

8. Method according to one of Claims 1 to 7,
**characterized in that**
the parameters of the alarm message are specified in accordance with the standard ITU X.733.

9. Method according to Claim 8,
**characterized in that**
the identification number (Nid) is represented by the parameter Notification ID and/or a further identification number (rNid) is represented by the parameter reloadNotificationNid.

10. Software program product comprising software modules, by means of which a method according to one of Claims 1 to 9 is executed by a processor.

## Revendications

1. Procédé de transmission sécurisée de messages d'alarme d'un élément de réseau (NE) à un système de gestion de réseau (NM) à l'intérieur d'un réseau de communication, dans lequel on vérifie du côté de la gestion de réseau l'ordre des messages d'alarme transmis à l'aide d'un numéro d'identification (Nid) qui caractérise le message d'alarme respectif et dans lequel, lors de la détection de l'absence d'un message d'alarme, on transmet à l'élément de réseau (NE) un message de demande (Set) contenant le numéro d'identification (Nid) du message d'alarme manquant pour provoquer une nouvelle transmission du message d'alarme manquant, **caractérisé par le fait que** le message d'alarme est **caractérisé** avec au moins un autre numéro d'identification (rNid) pour la phase de démarrage à froid et/ou de démarrage à chaud.

2. Procédé selon la revendication 1, **caractérisé par le fait que** le numéro d'identification (Nid) et/ou le ou les autres numéros d'identification (rNid) du message d'alarme transmis en dernier sont conservés du côté de la gestion de réseau et du côté de l'élément de réseau.

3. Procédé selon la revendication 2, **caractérisé par le fait que**, pour la vérification de l'ordre des messages d'alarme transmis, on compare chaque numéro d'identification conservé (Nid, rNid) au numéro d'identification correspondant du message d'alarme transmis en dernier.

4. Procédé selon les revendications 1 à 3, **caractérisé par le fait que**, pour la vérification de l'ordre des messages d'alarme transmis, on demande (Get) à l'élément de réseau (NE) le numéro d'identification (Nid) et/ou le ou les numéros d'identification (rNid) du message d'alarme transmis en dernier.

5. Procédé selon la revendication 4, **caractérisé par le fait que**, dans le cas d'un échec de la demande (Get) d'un numéro d'identification, on répète la demande après un certain temps prédéterminé.

6. Procédé selon la revendication 4 ou 5, **caractérisé par le fait que** l'on compare chaque numéro d'identification demandé (Nid, rNid) au numéro d'identification correspondant (Nid, rNid) du message d'alarme transmis en dernier et, lorsque les numéros ne coïncident pas, on transmet à l'élément de réseau au moins un message de demande (Set) contenant le numéro d'identification (Nid, rNid) qui a été demandé et qui ne coïncide pas.

7. Procédé selon l'une des revendications 1 à 6, **caractérisé par le fait que** la transmission des messages d'alarme s'effectue selon le protocole normalisé SNMP (Simple Network Management Protocol) ou selon le protocole normalisé CMIP (Common Management Information Protocol).

8. Procédé selon l'une des revendications 1 à 7, **caractérisé par le fait que** les paramètres du message d'alarme sont spécifiés selon le standard ITU X.733.

9. Procédé selon la revendication 8, **caractérisé par le fait que** le numéro d'identification (Nid) est représenté par le paramètre Notification ID et/ou qu'un autre numéro d'identification (rNid) est représenté par le paramètre reloadNotificationNid.

10. Produit de programme logiciel comprenant des modules logiciels avec lesquels un procédé selon l'une des revendications 1 à 9 est exécuté par un processeur.
